# DEMANDE DE BREVET EUROPEEN

(11) **EP 0 893 521 A1**
(43) Date de publication de la demande: **27.01.1999**
(21) Numéro de dépôt: 98420127.7
(22) Date de dépôt: 21.07.1998
(51) Int. Cl.: D03C 3/42, D03C 3/44, F16F 1/12

(54) **Embout pour élément de métier à tisser, élément pourvu d'un tel embout et métier à tisser pourvu d'un tel élément**

(30) Priorité: 23.07.1997 FR 9709602
(71) Demandeur: STAUBLI LYON, 69680 Chassieu (FR)
(72) Inventeur: Burnet, René, 38230 Charvieu (FR)
(74) Mandataire: Myon, Gérard Jean-Pierre

(57) **Abrégé**

Cet embout (24) comprend une première extrémité destinée à être fixée sur l'élément (12) du métier à tisser, et une seconde extrémité destinée à s'engager dans le volume intérieur d'un ressort (16). L'embout (24) comporte des dents (40) de fixation par fichage dans le ressort (16).

Application à un dispositif de commande de la position d'un fil de chaîne de métier à tisser.

## Description

La présente invention concerne un embout pour relier à un ressort un élément, notamment une lisse, de métier à tisser équipé d'une mécanique Jacquard, du type comprenant une première extrémité destinée à être fixée sur cet élément et une seconde extrémité destinée à s'engager dans le volume intérieur du ressort.

De manière connue, chaque crochet d'une mécanique Jacquard est associé à une multiplicité de cordons constituant ce que l'on appelle un harnais. Chacun de ces cordons est relié à l'extrémité supérieure d'un dispositif de commande de la position d'un fil de chaîne du métier, l'extrémité inférieure de ce dispositif étant reliée à un point d'ancrage fixe.

Ce dispositif de commande est constitué par un élément supérieur, encore dénommé lisse, comprenant un oeillet de passage du fil de chaîne, par un ressort de rappel de la lisse en position basse, et par un élément inférieur, encore dénommé dispositif de liaison, lequel se trouve assujetti, par ses extrémités respectivement supérieure et inférieure, à la fois au ressort et à un point d'ancrage fixe.

Cette lisse et ce dispositif de liaison présentent généralement un embout terminal du type précité, permettant leur fixation avec le ressort de rappel. Cet embout est habituellement réalisé en une matière plastique moulée et comprend un filetage qui assure son engagement par vissage dans les premières spires de l'extrémité correspondante du ressort.

Cette fixation par vissage, qui est par exemple décrite dans FR-A-2 674 264, présente cependant les inconvénients suivants. La mise en place de l'embout dans le ressort est délicate. Elle doit être effectuée avec le plus grand soin et nécessite l'emploi d'une main d'oeuvre qualifiée pendant un temps relativement long. Cette mise en place ne peut pas être automatisée à cause du mouvement de rotation nécessaire pour chaque embout. Compte tenu du nombre considérable de vissages à réaliser, qui peut atteindre, voire dépasser 10 000, ceci entraîne une perte de temps importante.

DE-A-26 51 057 et EP-A-0 292 632 décrivent des embouts dont une extrémité lisse peut être introduite axialement dans le volume intérieur d'un ressort correspondant. Toutefois, ces agencements ne confèrent pas une grande stabilité à la liaison ainsi réalisée, en particulier à l'égard des efforts d'arrachement.

Afin de pallier les différents inconvénients de l'art antérieur évoqué ci-dessus, l'invention vise la réalisation d'un embout pour élément de métier à tisser, qui puisse être fixé sur l'extrémité d'un ressort de manière fiable et robuste, au moyen d'une opération simple et qui puisse être mise en oeuvre par des moyens automatiques.

A cet effet, l'invention a pour objet un embout du type précité, caractérisé en ce qu'il comporte des dents de fixation par fichage dans le ressort hélicoïdal.

On entend par fichage une opération faisant intervenir une introduction sensiblement axiale de l'extrémité de l'embout dans le volume intérieur du ressort.

L'invention permet de réaliser les objectifs précédemment mentionnés. En effet, la mise en oeuvre d'un effort sensiblement axial, en comparaison avec une opération de vissage, est beaucoup plus simple, plus fiable, et peut être réalisée de manière automatique, ce qui entraîne un gain de temps et une économie considérable.

De plus, du fait de la présence de dents, la fixation de l'embout sur le ressort possède une résistance accrue vis-à-vis des tractions et vibrations rencontrées lorsque le métier à tisser est en service.

L'embout conforme à l'invention peut comporter une ou plusieurs des caractéristiques suivantes :
- les dents de fixation par fichage présentent une surface de came pour l'introduction axiale de l'embout dans le volume intérieur du ressort, et une surface de retenue de l'embout dans ledit volume ;
- les dents sont disposées uniquement sur une partie de la périphérie externe de l'embout et sont réparties par paires, chaque paire de dents étant disposée de part et d'autre de l'axe longitudinal de l'élément ;
- l'embout comprend, dans la région des dents de fixation par fichage, des moyens permettant le rétrécissement de sa section transversale. Ceci permet à la fois une introduction plus facile de l'embout dans le volume intérieur du ressort, et évite des contraintes radiales trop importantes aux spires du ressort qui entraîneraient leur détérioration ;
- l'embout comprend deux branches se rejoignant à leur extrémité, qui délimitent une ouverture traversante transversale permettant le rétrécissement élastique de la section transversale dudit embout ;
- les dents de fixation par fichage permettent une séparation de l'embout et du ressort par dévissage. Ainsi, l'embout est susceptible d'être ôté facilement du ressort, en cas d'incident dû, notamment, à la rupture de ce dernier ;
- les dents sont disposées sensiblement sur le trajet d'une hélice. Ceci permet le dévissage de l'embout par rapport au ressort ;
- l'embout est prolongé par deux branches courbes élastiques réunies au niveau de leurs extrémités libres pour former une embase à partir de laquelle s'étendent deux branches divergentes élastiques. Cette conformation permet de générer un frottement de ces branches contre les spires extrêmes du ressort propre à supprimer la résonance de ce dernier lorsqu'il est soumis à des tractions.

L'invention a également pour objet un élément de métier à tisser équipé d'une mécanique Jacquard, du type comprenant une partie filiforme assujettie, à une première extrémité, soit à la mécanique Jacquard, soit à un point d'ancrage fixe, et comportant, à une seconde extrémité, un embout de liaison avec un ressort, tel que précédemment décrit.

L'invention a enfin pour objet un métier à tisser du type comprenant une mécanique Jacquard, un cadre inférieur et au moins un dispositif de commande d'un fil de chaîne, caractérisé en ce qu'il comporte au moins un élément tel que décrit ci-dessus.

L'invention va être décrite ci-après, en référence aux dessins annexés donnés uniquement à titre d'exemple et dans lesquels :
- la figure 1 est une vue schématique partielle d'un métier à tisser comprenant des éléments conformes à l'invention ;
- la figure 2 est une vue en perspective illustrant un embout conforme à l'invention équipant l'extrémité inférieure d'une lisse;
- la figure 3 est une vue de côté, à plus grande échelle, de l'embout représenté à la figure 2 ;
- la figure 4 est une vue en coupe suivant la ligne IV-IV de la figure 3 ;
- la figure 5 est une vue en coupe partielle, selon la ligne V-V de la figure 3 ;
- la figure 6 est une vue à plus grande échelle des dents de l'embout représentées à la figure 5 ;
- les figures 7 et 8 sont des vues en coupe analogues à la figure 5, montrant à l'introduction d'un ressort sur l'embout conforme à l'invention ;
- la figure 9 est une vue en coupe analogue à la figure 5 d'un second mode de réalisation de l'invention.

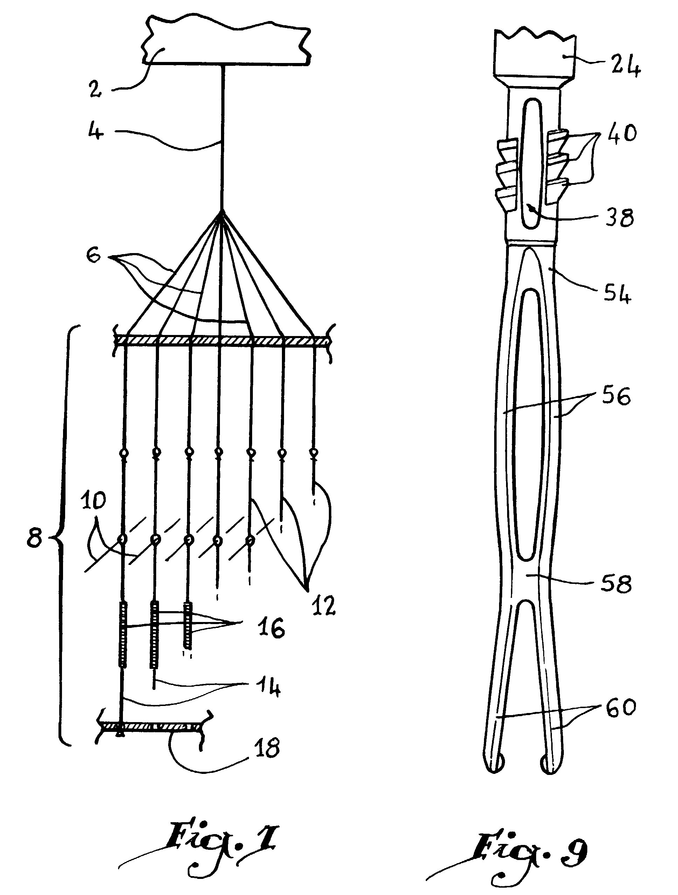

La figure 1 représente, de manière très schématique, une mécanique Jacquard 2 d'un métier à tisser. Cette mécanique comprend plusieurs arcades dont une seule 4, a été représentée.

L'extrémité inférieure de cette arcade est associée à plusieurs cordons 6, formant, de manière connue, un harnais, chaque cordon étant accroché à l'extrémité supérieure d'un dispositif de commande 8 de la position d'un fil de chaîne 10.

Ce dispositif de commande 8 comprend deux éléments conformes à l'invention, à savoir un élément supérieur 12, encore appelé lisse, et un élément inférieur 14, encore appelé dispositif de liaison. Cette lisse 12 et ce dispositif de liaison 14 sont engagés, respectivement par leur extrémité inférieure et par leur extrémité supérieure, dans un ressort hélicoïdal 16, comme cela sera explicité en regard des figures suivantes. L'extrémité inférieure du dispositif de liaison 14 est assujettie à un cadre d'ancrage fixe 18.

Le dispositif de liaison 14 coopère avec le ressort 16 de manière à constituer un élément de rappel de la lisse 12 en position basse.

Les figures 2 à 5 montrent un embout conforme à l'invention équipant l'extrémité de la lisse 12. Dans ce qui suit, il est uniquement fait référence à un embout monté sur une lisse 12, l'embout équipant le dispositif de liaison 14 au niveau de sa jonction avec le ressort 16 étant analogue.

La lisse 12 comprend une partie filiforme 22 dont l'extrémité supérieure non représentée est associée à un cordon 6 et dont l'extrémité inférieure est munie d'un embout 24 réalisé par moulage, avantageusement par injection d'une seule pièce, en une matière plastique telle qu'une polyamide.

L'embout 24 comprend une douille 26 percée d'un orifice non traversant de logement de la partie filiforme, et dont l'extrémité 28 éloignée de la partie filiforme est sensiblement cylindrique.

La douille est prolongée par une embase 30 cylindrique de diamètre inférieur à celui de l'extrémité 28, un épaulement 32 étant délimité entre ces deux éléments. L'épaulement 32 assure une fonction de butée pour le ressort hélicoïdal 16, comme cela sera explicité en regard de la figure 8.

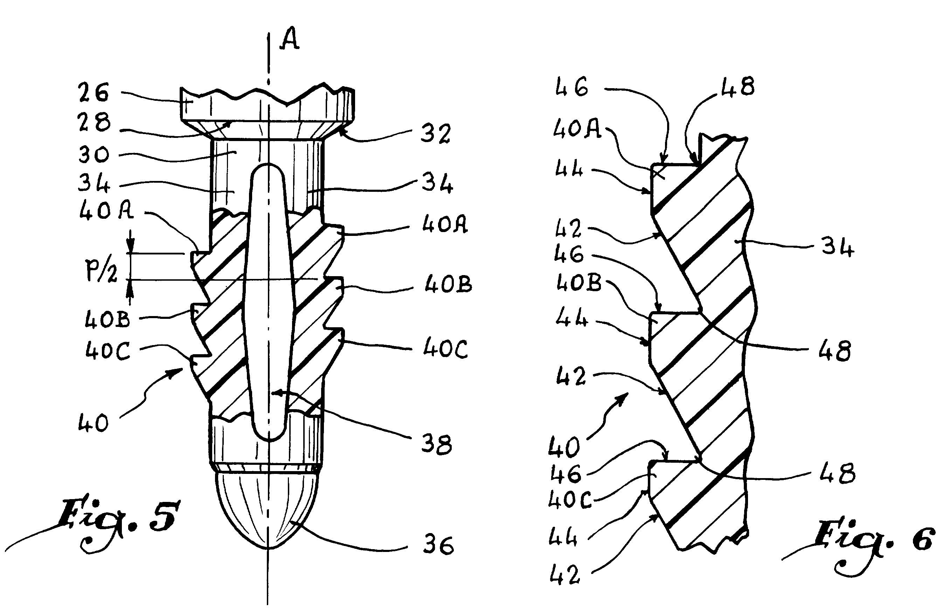

L'embase 30 se prolonge selon deux branches 34, sensiblement symétriques par rapport à l'axe A de la lisse. Comme cela apparaît plus clairement à la figure 4, ces branches 34 présentent, en section transversale, un profil extérieur sensiblement circulaire, de même centre et de même rayon que celui de l'embase 30.

Les deux branches 34 se rejoignent, au niveau de leurs extrémités opposées à la douille 26, de manière à constituer une ogive 36 assurant une introduction aisée de l'embout 24 dans le ressort 16.

Les deux branches 34 forment, avec l'embase 30 et l'ogive 36, un évidement 38 transversal. Cet évidement présente une forme oblongue, et présente une section plus importante au niveau de sa partie médiane.

Chacune des branches 34 est pourvue de dents 40 assurant la fixation mutuelle de l'embout 24 et du ressort 16. Ces dents 40 sont réparties par paires au niveau de chaque branche, et on appellera, pour plus de clarté dans ce qui suit, 40A la paire de dents la plus proche de la douille 26, 40B la paire de dents intermédiaire et 40C la paire de dents la plus éloignée de la douille.

Chaque dent présente, comme il ressort en particulier de la figure 6, une surface distale ou inférieure 42 faisant saillie à partir de la surface de la branche 34 et inclinée à la fois radialement vers l'extérieur et axialement en direction de la douille 26, une surface intermédiaire 44 s'étendant selon une direction sensiblement axiale, ainsi qu'une surface proximale ou supérieure 46 sensiblement normale à l'axe A de la lisse. Chacune de ces surfaces est terminée par un arrondi 48 assurant la transition de forme avec la surface suivante.

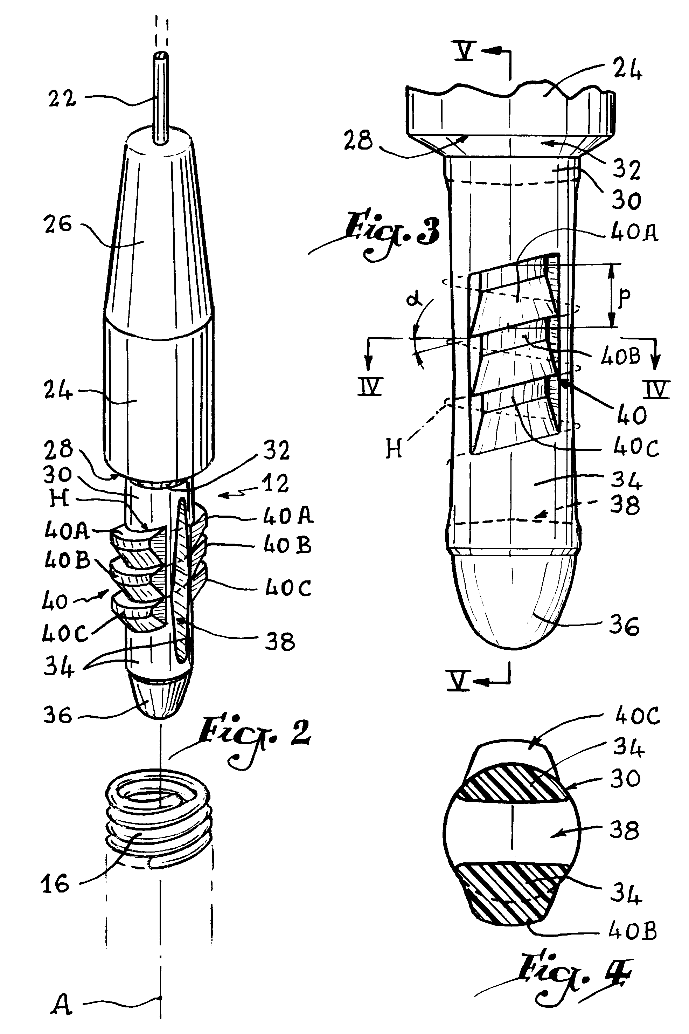

Les dents 40 sont disposées sur le tracé d'une hélice H, représentée en traits mixtes fins aux figures 2 et 3, dont le pas p est égal à la distance axiale séparant deux dents successives, et dont l'axe est confondu avec l'axe A de la lisse. De la sorte, comme il ressort en particulier de la figure 3, les dents 40 sont, dans leur ensemble, inclinées par rapport à une droite D perpendiculaire à l'axe A selon un angle α. En outre, il existe, pour chaque paire de dents, un décalage axial égal à p/2, entre chaque point particulier d'une dent et le point correspondant de la dent opposée obtenu par symétrie par rapport à l'axe A de la lisse.

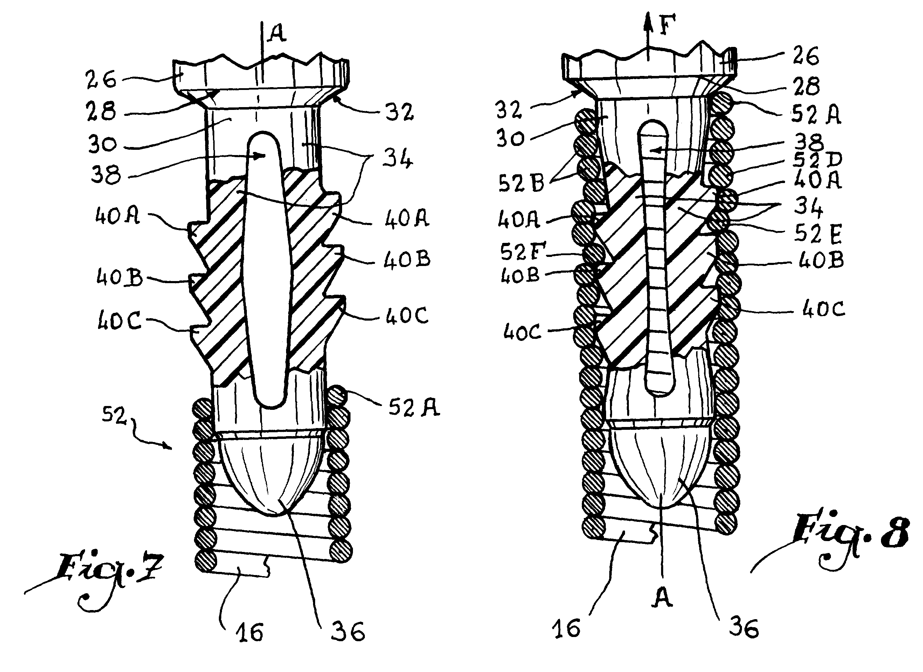

On va maintenant décrire la fixation de l'embout 24 de la lisse 12 sur le ressort hélicoïdal 16, en faisant référence aux figures 7 et 8.

L'embout et le ressort sont tout d'abord mutuellement rapprochés, sensiblement selon la direction de l'axe A de la lisse. Les spires extrêmes 52 du ressort 16 progressent ensuite sur les surfaces distales 42 de la paire de dents 40C. L'inclinaison de ces surfaces 42 assure une introduction axiale aisée de l'embout dans le volume intérieur du ressort. Au fur et à mesure que les spires 52 progressent sur les surfaces 42, le ressort comprime radialement les deux branches 34. La présence de l'évidement 38 permet un rétrécissement de la section transversale de l'extrémité de l'embout, ce qui permet également d'en faciliter l'introduction.

Les spires extrêmes 52 avancent ensuite sur les surfaces intermédiaires 44 de la paire de dents 40C puis, de manière analogue, sur les surfaces distales 42 de la paire de dents suivante 40B. En fin d'introduction de l'embout dans le volume intérieur du ressort (figure 8), la spire extrême 52A se trouve en butée contre l'épaulement 32, puis les spires suivantes 52B sont intercalées entre cet épaulement 32 et la dent la plus proche 40A. Un certain nombre de spires recouvrent la périphérie extérieure des dents 40, trois d'entre elles 52D, 52E et 52F étant disposées au voisinage immédiat des surfaces proximales 46 de chaque dent. Les spires suivantes du ressort 16 reposent sur l'extrémité des branches 34.

Cette conformation assure une excellente tenue de l'embout 24 au sein du ressort 16, lorsque ces deux éléments sont soumis à des tractions axiales répétées, comme cela est le cas lorsque le métier à tisser est en service. En effet, lorsque l'embout 24 est soumis à une contrainte axiale dans le sens de la flèche F à la figure 8, les spires 52D, 52E et 52F prennent appui contre les surfaces proximales 46 de l'ensemble des dents 40. Ces surfaces 46 assument donc une fonction de retenue des spires 52, ce qui empêche ainsi tout dégagement mutuel entre le ressort et l'embout.

Toutefois, il demeure possible d'ôter le ressort de l'embout si cela s'avère nécessaire, notamment en cas de rupture du ressort ou de la lisse. En effet, la disposition des dents 40 sur le trajet de l'hélice H permet d'enlever le ressort de l'embout, par dévissage.

La figure 9 montre un autre mode de réalisation d'un embout conforme à l'invention.

L'extrémité des branches 34, opposée à la douille 26 de l'embout 24, n'est plus constituée par une ogive, mais consiste en une portion cylindrique 54, prolongée par deux branches élastiques 56 légèrement divergentes dans leurs parties proximales, puis convergentes dans leurs parties distales. Ces branches 56 sont réunies au niveau de leurs extrémités libres pour constituer une embase 58 à partir de laquelle s'étendent deux branches divergentes 60. Les branches 56 et 60 sont alors susceptibles, en service, de frotter sur les spires du ressort 16 de manière à supprimer la résonance de ce dernier lorsqu'il est soumis à des tractions et des vibrations inhérentes au fonctionnement du métier à tisser.

L'invention n'est pas limitée aux exemples décrits et représentés. On pourra, entre autres, munir les branches de l'embout d'un nombre de dents différents de celui mentionné dans la description et/ou de branches de géométries différentes de celles décrites, notamment du type de celles représentées dans le document EP-A-0 678 603.

## Revendications

1. Embout (24) pour relier à un ressort (16) un élément (12 ; 14), notamment une lisse (12), de métier à tisser équipé d'une mécanique Jacquard (2), du type comprenant une première extrémité destinée à être fixée sur ledit élément (12 ; 14) du métier à tisser, et une seconde extrémité destinée à s'engager dans le volume intérieur du ressort (16), caractérisé en ce que ledit embout (24) comporte des dents (40) de fixation par fichage dans ledit ressort (16).

2. Embout selon la revendication 1, caractérisé en ce que les dents (40) de fixation par fichage présentent une surface de came (42) pour l'introduction axiale de l'embout (24) dans le volume intérieur du ressort (16), et une surface de retenue (46) de l'embout (24) dans ledit volume.

3. Embout selon la revendication 1 ou 2, caractérisé en ce que les dents (40) sont disposées uniquement sur une partie de la périphérie externe de l'embout (24) et sont réparties par paires, chaque paire de dents étant disposée de part et d'autre de l'axe longitudinal (A) de l'embout (24).

4. Embout selon l'une quelconque des revendications 1 à 3, caractérisé en ce qu'il comprend, dans la région des dents (40) de fixation par fichage, des moyens (38) permettant le rétrécissement de sa section transversale.

5. Embout selon la revendication 4, caractérisé en ce qu'il comprend deux branches (34) se rejoignant à leur extrémité, qui délimitent une ouverture traversante transversale (38) permettant le rétrécissement élastique de la section transversale dudit embout (24).

6. Embout selon l'une quelconque des revendications 1 à 6, caractérisé en ce que les dents (40) de fixation par fichage permettent une séparation de l'embout et du ressort par dévissage.

7. Embout selon la revendication 6, caractérisé en ce que les dents (40) sont disposées sensiblement sur le trajet d'une hélice (H).

8. Embout selon l'une quelconque des revendications 1 à 7, caractérisé en ce qu'il est prolongé par deux branches courbes (56) élastiques réunies au niveau de leurs extrémités libres pour former une embase (58) à partir de laquelle s'étendent deux branches divergentes (60) élastiques.

9. Elément (12 ; 14) de métier à tisser équipé d'une mécanique Jacquard (2), du type comprenant une partie filiforme (22) assujettie, à une première extrémité, soit à la mécanique Jacquard (2), soit à un point d'ancrage fixe (18), et comportant, à une seconde extrémité, un embout (24) de liaison avec un ressort (16), caractérisé en ce que ledit embout (16) est conforme à l'une des revendications 1 à 8.

10. Métier à tisser, du type comprenant une mécanique Jacquard (2), un cadre (18) inférieur et au moins un dispositif de commande (8) de la position d'un fil de chaîne (10), caractérisé en ce qu'il comporte au moins un élément (12 ; 14) conforme à la revendication 9.
